# EUROPEAN PATENT APPLICATION

(11) **EP 1 434 137 A1**
(43) Date of publication of application: **30.06.2004**
(21) Application number: 02425790.9
(22) Date of filing: 23.12.2002
(51) Int. Cl.: G06F 13/28

(54) **Bus architecture with primary bus and secondary bus for microprocessor systems**

(71) Applicant: STMicroelectronics S.r.l., 20041 Agrate Brianza (Milano) (IT)
(72) Inventor: Pezzini, Saverio, 20059 Vimercate (IT)
(74) Representative: Pellegri, Alberto

(57) **Abstract**

A microprocessor system comprising a high speed primary bus (AHB) controllable by more than one master device connected to it and at least a secondary bus (APB) coupled to the primary bus (AHB) through an interface (SLAVE WRAPPER) and to which may be connected relatively slow peripherals, includes in said interface (SLAVE WRAPPER) coupling said secondary bus (APB) to said high speed primary bus (AHB) a dedicated direct memory access controller (DMA) that during each data transfer routine between a peripheral connected to said secondary bus and a peripheral connected to said primary bus reduces the engagement of the primary bus to a single transfer phase.

Moreover, even all the interfaces (SLAVE WRAPPER) for coupling memory devices (RAM, FLASH) and other fast peripherals to the primary high speed bus (AHB) may includes a dedicated direct memory access controller (DMA) thus reducing to a single transfer phase engagement of said high speed bus (AHB) during a data transfer routine among memory devices (RAM, FLASH) and fast peripherals connected to the high speed primary bus.

## Description

The present invention relates to microprocessor systems, in which a secondary bus, to which relatively slow peripherals may be coupled, is connected to a high speed primary bus controllable by more than a single master device.

Processing and/or control systems often use RISC microprocessors that generally use a bus architecture with a first high speed multi-master primary system bus, often called AHB, ASB or with other acronyms or abbreviations, to which fast peripherals, typically memory devices such as for example a nonvolatile memory and a RAM memory may be coupled through appropriate interfaces, and at least a secondary bus, often called APB or with other acronyms or abbreviations, coupled to the primary bus through an appropriate interface and to which relatively slow peripherals, input/output circuits and the like are coupled.

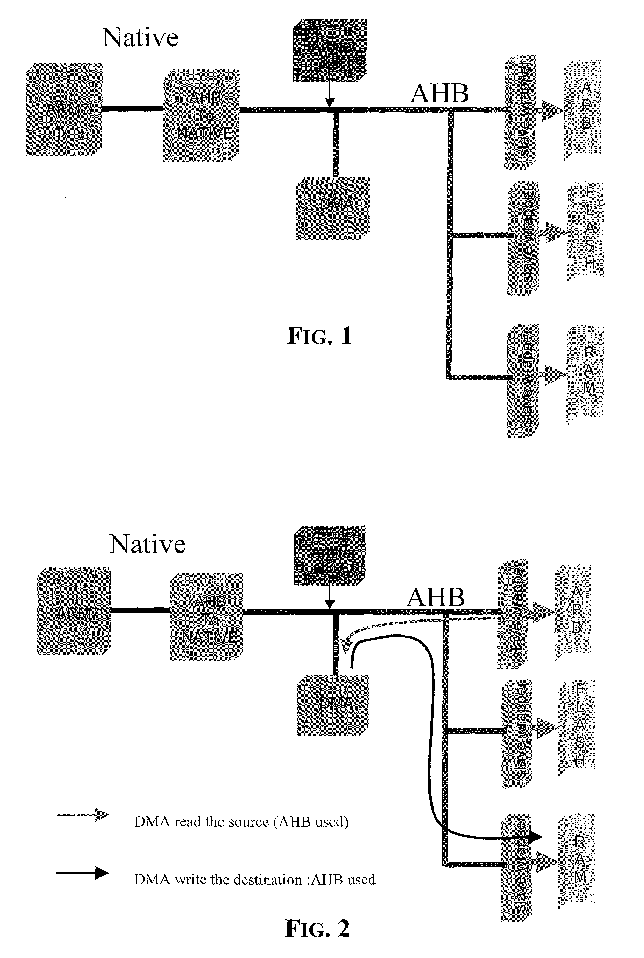

A typical architecture of a RISC microprocessor system is shown in Figure 1.

Usually the processor, which in the depicted example is an ARM7 processor, has its own native bus NATIVE which is transformed by the block NATIVE TO AHB in a high speed primary bus AHB, supporting an appropriate protocol for managing the different functions of information transfer that must take place through the bus AHB.

Typically, the bus AHB is a multi-master bus that is the control of the bus may be taken by more than one master device. Typically a high speed bus AHB may be controlled, besides the central processing unit, that is the processor ARM7, also by the DMA (Direct Memory Access) controller for accessing data stored in the memory devices coupled to the primary bus AHB or for writing data therein by peripherals connected to the secondary bus APB.

The control of the high speed primary bus AHB by the processor ARM7 or by the controller DMA is managed by an appropriate arbiter circuit ARBITER for preventing conflicts.

As schematically shown in Figure 2 by the arrows, each data transfer from a peripheral coupled to the secondary bus APB and a peripheral coupled to the primary bus AHB through the controller DMA, whether it is a transfer of data from the peripheral to the memory or vice versa, engages the bus AHB for two transfer cycles or phases.

In fact, the steps of a DMA transfer are:
1) a certain peripheral sends to the DMA controller a request for a data transfer in DMA mode;
2) the DMA controller demands to the circuit ARBITER the control of the bus AHB (a clock cycle);
3) in case of a data transfer from the peripheral to the RAM memory, the DMA controller reads the data register of the peripheral and writes the read data in a DMA buffer, using in this phase the high speed primary bus AHB and the secondary bus APB;
4) the DMA controller processes the data (a clock cycle);
5) the DMA controller writes the data in the RAM memory, obviously using even in this phase the high speed primary bus AHB and preventing any other master device (in the depicted example, the processor ARM7) from accessing the secondary bus APB;
6) finally the DMA controller releases the control on the high speed primary bus AHB.

Of course, the above example is only one of many possible examples of different bus architectures that in any case require access to the primary bus for two transfer phases in order to complete a DMA data transfer.

For all these bus architectures, it has been found that the duration of interrupt routines that, for a DMA transfer require taking control of the high speed primary bus for the two transfer phases (data acquisition by the DMA controller followed by transmission of data to the selected peripheral), may be considerably shortened by reducing to a single transfer phase the engagement of the high speed primary bus.

According to a basic embodiment of the present invention, this important result is achieved by associating to or incorporating the bridging interface between the high speed primary bus and the secondary bus a dedicated DMA controller such to limit the requirement of the DMA controller to access the primary bus only for reading or writing data in the memory (fast peripherals) directly connected to the primary bus.

According to an extended and even more preferred embodiment of this invention, each bridging interface circuit between the high speed primary bus and a secondary bus and fast peripherals themselves, connected to the high speed primary bus, all include their own DMA controller.

In this way, the duration of all the interrupt routines for exchanging data among peripherals, whether they are relatively slow peripherals coupled to the secondary bus and/or fast peripherals directly coupled through a dedicated interface incorporating a DMA controller to the high speed primary bus itself, may be reduced to a single event of data transfer through the primary bus.

The invention is more precisely defined in the annexed claims.

The different aspects and advantages of the present invention will be even more easily understood through the following description of several preferred embodiments and by referring to the attached drawings, wherein:
**Figure 1** shows, as mentioned above, a common block diagram of a microprocessor system;
**Figure 2** shows the data streams during a transfer cycle from a peripheral coupled to the secondary bus APB to the random access memory of the system;
**Figure 3** shows the architecture of a modified system according to this invention;
**Figure 4** shows the architecture of the system according to an extensive embodiment of this invention.

For ease of comparison, the specification will refer to a microprocessor system with a sample bus architecture already discussed above.

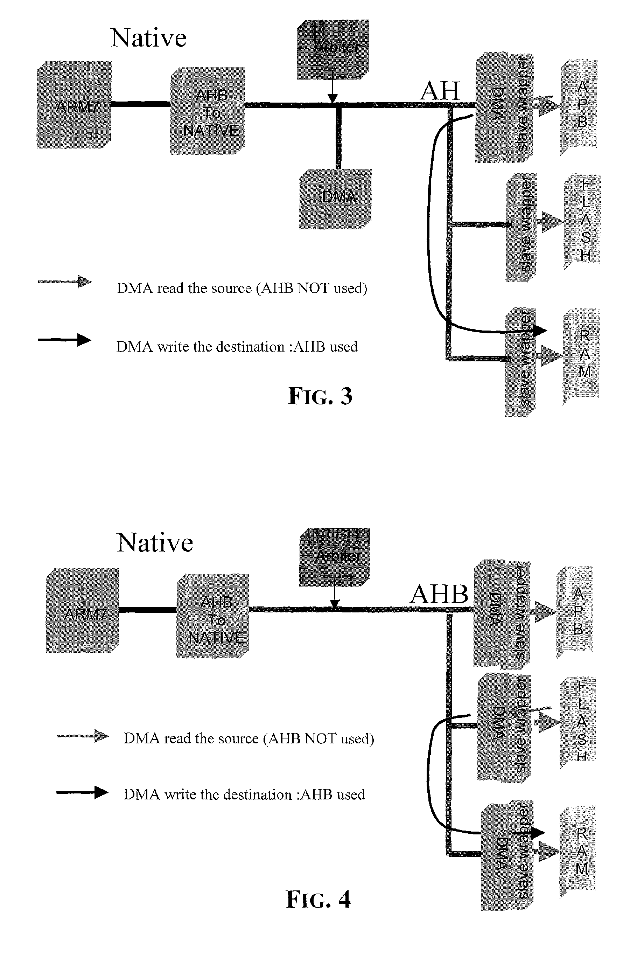

Referring to Figure 3, the realization of a DMA controller associated to or incorporated in the interface or bridging circuit SLAVE WRAPPER between the high speed primary bus AHB and the secondary bus APB, to which are commonly coupled relatively slow peripherals of the system, allows the taking over by the DMA controller of the control of the primary bus AHB to be reduced to a single event of data transfer.

The depicted example refers to the writing of data coming from a peripheral coupled to the bus APB in the system RAM.

In a system made according to this invention, as in Figure 3, a DMA data transfer from a peripheral to the RAM memory takes place through the following steps:
1) a peripheral sends a transfer request in DMA mode to the DMA controller present in the interface or bridging circuit (SLAVE WRAPPER) between the secondary bus APB to which is coupled the peripheral and the primary bus AHB;
2) the DMA controller incorporated in the interface reads the data register of the peripheral and writes the data in a DMA buffer, without engaging the primary bus AHB, but only the secondary bus APB;
3) the DMA controller processes the data (a clock cycle) and demands to the circuit ARBITER control of the bus AHB;
4) the DMA controller writes the data in the memory engaging for doing it the primary bus AHB;
5) finally the DMA controller releases control of the bus AHB.

As indicated in the diagram of Figure 3, during a read cycle of data from the register of the peripheral by the DMA controller incorporated in the interface SLAVE WRAPPER, the primary high speed bus AHB is not used and the control and use thereof may be assumed by another master device, the processor ARM7 or the master DMA controller that may transfer during this phase data between fast peripherals that are directly coupled to the primary bus AHB, for example between a nonvolatile memory FLASH and the RAM or vice versa.

According to this embodiment of the invention, during a write phase of data in the RAM memory (Figure 3), the DMA controller associated to the interface between the bus AHB and the bus APB prevents any other master device from accessing the bus APB.

Of course, even in the case of the inverse operation of accessing by a peripheral to data recorded in the system RAM or in the nonvolatile FLASH memory, the primary bus AHB will be engaged for a single transfer phase and precisely for reading data from the RAM or FLASH memory in a buffer of the DMA controller that thereafter will release the control of the primary bus AHB and carry out the transfer of the data to the peripheral, using exclusively the secondary bus APB during this phase.

An extended embodiment of this invention that provides further advantages in terms of reduced use of the AHB bus for interrupts relative to data transfers, is depicted in Figure 4.

According to such an even more preferred embodiment of this invention, each interface between the peripheral and the primary high speed bus AHB includes a dedicated DMA controller for managing transfers in DMA mode to or from the respective fast peripheral directly coupled to the primary bus AHB and to and from the slow peripherals coupled to the secondary bus APB.

In this way, for any data transfer on the primary bus AHB, whether the transfer takes places between fast peripherals coupled directly on the same primary bus AHB itself or between one of these and a peripheral coupled to the secondary bus APB, the primary bus AHB is used for a single transfer phase instead for two.

Figure 4 shows by respective arrows of the two transfer phases, a DMA data transfer from the nonvolatile FLASH memory to the RAM.

Even in this case, the reading of data from the source peripheral takes place without engaging the primary bus AHB.

## Claims

1. A microprocessor system comprising a high speed primary bus (AHB) controllable by more than one master device connected to it and at least a secondary bus (APB) coupled to the primary bus (AHB) through an interface (SLAVE WRAPPER) and to which may be connected relatively slow peripherals, on said primary bus being coupled through an interface circuit at least a microprocessor (ARM7), at least a direct memory access controller (DMA) and through respective interfaces (SLAVE WRAPPER) at least a random access memory (RAM), at least a nonvolatile memory (FLASH) and optionally other relatively fast peripherals, an arbiter circuit (ARBITER) connected to the primary bus (AHB) for managing requests of access to the bus by said master devices (ARM7, DMA), **characterized in that**
at least said interface (SLAVE WRAPPER) coupling said secondary bus (APB) to said high speed primary bus (AHB) includes a dedicated direct memory access controller (DMA) that during each data transfer routine between a peripheral connected to said secondary bus and a peripheral connected to said primary bus reduces to a single transfer phase engagement of said primary bus.

2. The system of claim 1, **characterized in that** each of said interfaces (SLAVE WRAPPER) for coupling said memory devices (RAM, FLASH) and fast peripherals to said primary high speed bus (AHB) includes a dedicated direct memory access controller (DMA) reducing to a single transfer phase engagement of said high speed bus (AHB) during a data transfer routine among said memory devices (RAM, FLASH) and fast peripherals connected to said high speed primary bus.
